# EUROPEAN PATENT SPECIFICATION

(11) **EP 3 081 122 B1**
(45) Date of publication and mention of the grant of the patent: **12.09.2018**
(21) Application number: 14824561.6
(22) Date of filing: 02.12.2014
(51) Int. Cl.: A47J 31/36

(54) **EXTRACTION DEVICE OF SIMPLIFIED CONSTRUCTION AND BEVERAGE PREPARATION SYSTEM INCLUDING SAID DEVICE**
EXTRAKTIONSVORRICHTUNG MIT VEREINFACHTER STRUKTUR SOWIE GETRÄNKEZUBEREITUNGSSYSTEM MIT DIESER VORRICHTUNG
DISPOSITIF D'EXTRACTION À STRUCTURE SIMPLIFIÉE ET SYSTÈME DE PRÉPARATION DE BOISSONS COMPRENANT CE DISPOSITIF

(30) Priority: 02.12.2013 PT 107333513
(43) Date of publication of application: 19.10.2016
(73) Proprietor: Novadelta-Comércio e Industria de Cafés, S.A., 1950-041 Lisboa (PT)
(72) Inventor: NABEIRO, Rui Miguel, P-7370-112 Campo Maior (PT)
(74) Representative: Ferreira Pinto, Francisca
(86) International application number: PCT/PT2014/000069
(87) International publication number: WO 2015/084200

(56) References cited:
- EP-A2- 2 218 368
- EP-B1- 1 444 932

## Description

### Field of the invention

The present invention refers to the field of extraction devices usually used for extraction of individual portion packages, such as for example rigid capsule or flexible pods, and presenting a compact construction configuration and simplified device actuation means.

The present invention further refers to a beverage preparation system, such as for example espresso type coffee, tea and similar, by means of extraction of portion packages, and including said extraction device.

### Background of the invention

The prior art includes many solutions of beverage preparation machines presenting an extraction device adapted for injecting upstream a pressurized fluid flow into portion packages and for collecting the resulting beverage downstream thereof. Said extraction device is typically provided so that two parts of device confine an extraction chamber adapted so as to collect said portion package when in an open position, and to impinge it in a fixed manner when in a closed position.

Document EP 1444932 B1 discloses an extraction device with displacement of a first part of device along a single linear direction relative to a second part of device. In particular, the actuation force of said first part of device is provided with linear actuation means of piston type that can be driven by hydraulic or electric means.

Document EP 1486150 B1 and alternative closing mechanism of an extraction device, in particular with a general arrangement of telescopic type comprising two parts, whereby at least one of said parts is provided linearly mobile along a linear direction, inwards and outwards from the machine main envelope.

Documents EP 2205133 B1, EP 2218368 A2, EP 2218369 A2 and EP 2218370 A2 disclose an extraction device of the same type housed inside of a front part of the main envelope of the beverage preparation machine. In particular, the arrangement that collects the capsule corresponds to a frontal part of the extraction device and can be displaced in substantially horizontal manner, relative to a water injection arrangement provided as a fixed rear part, whereby there is provided a pair of pins that engage in a pair of grooves presenting a configuration corresponding to a linear or helical movement. This solution contributes to an improved displacement of the capsule collecting part.

Said device further proposes that said front part of the extraction device is provided as an actuation handle and comprises in particular a beverage discharge adapted to serve as a manually graspable means. According to the proposed solution, when the front part carries out the helicoid movement to an open position, the beverage discharge results rotated relative to a vertical discharge orientation.

The disposition that collects the capsule presents a tubular cover and an internal capsule collection element that are attached to each other in fixed manner. Said tubular cover presents an opening that provides a passage for insertion of capsule. When in an open position, said collection and injection dispositions are spaced apart, and there is formed said passage between the first and the second. When in a closed position, said opening is rotated along a helical movement so that is gets closed by a closing part of the main envelope of the machine. This arrangement appears to minimize the risk of projection of dangerous hot liquid.

Said extraction device further comprises a capsule cage provided by a cylindrical box in the conduction support and adapted so that it can be moved in a piston-like manner, under the water pressure effect, so as to increase the tightness next to the edge of capsule.

There is therefore a need to provide an extraction device with a simple and reliable structure, requiring less materials and less production effort, and providing an ergonomic and intuitive actuation by a user.

### General description of the invention

The objective of the present invention is to provide an extraction device for preparing beverages by means of extraction of an aromatic substance, based upon the processing of respective individual portion packages and that distinguishes itself by a simpler and more compact general construction.

This objective is solved according to the present invention by means of an extraction device according to claim 1.

An extraction device according to the present invention presents a telescopic-like arrangement including a first telescopic part provided mobile and a second telescopic part provided stationary, whereby said mobile part is adapted so that it is the only part providing support to the downwards oriented side of said portion package inside of the extraction device. It thus results in an extraction device of simpler construction, with fewer components.

Moreover, the displacement extension of said first telescopic part along the longitudinal direction advantageously corresponds at least approximately to a characteristic dimension of said portion package, in particular the dimension thereof along said longitudinal direction, preferentially less than 1,4 times said longitudinal dimension. It thus results in a particularly compact extraction device.

According to a preferred embodiment, said first telescopic part presents an entry opening provided in a downstream zone oriented in a first direction and adapted so as to provide passage for introducing a portion package, when in an open position, and an exit opening, provided in an upstream zone oriented in a second direction substantially opposite to said first direction and adapted so as to provide exit passage to said portion package. Moreover, said exit opening is provided oriented in a second direction that defines an angle between 120° and 250°, preferentially between 150° and 200° with said first direction. This disposition provides a simpler telescopic arrangement, without needing to transfer the portion package between telescopic parts. According to another preferred embodiment, said passage openings are provided with a similar dimension and configuration to a section of said portion package, for example a front section, or corresponding to a region of different dimension and/or configuration where there is an absence of construction material of the mobile telescopic part in zones that include said first and second directions.

According to another preferred embodiment, said first and second telescopic parts present a similar longitudinal extension, whereby said longitudinal extension is smaller than 3 times a characteristic dimension of said portion package, preferentially smaller than 2,8 times the longitudinal dimension thereof.

According to another preferred embodiment, said first telescopic part is adapted so that it can collect said portion package in a downstream region inside thereof and carry said portion package between said open and closed position, and said second telescopic part is provided stationary as structure of support to the displacement of said first telescopic part between said open and closed positions, and vice-versa.

According to another preferred embodiment, said telescopic parts are provided so that they configure an extraction chamber, whereby the interior downstream and base walls of said extraction chamber are provided by an upstream region of one of said telescopic parts, preferentially of said first telescopic part, and the interior upstream and top walls of said extraction chamber are provided by a downstream region of the other of said telescopic parts, preferentially of said second telescopic part.

According to another preferred embodiment, said first telescopic part presents a downstream confining section that presents beverage discharge means in fluid connection with a beverage discharge provided downstream. Moreover, said second telescopic part presents an upstream confining section that presents fluid injection means, whereby said upstream confining section is provided in a central region along the longitudinal extension of said second telescopic part.

According to another preferred embodiment, said first telescopic part is configured so that it can receive a portion package through a respective entry opening, oriented upwards when in the open position, and can be moved along at least part of the exterior surface of said second telescopic part, up to a closed position where said portion package is impinged in fixed manner by said upstream confining section of said second telescopic part provided with pressurized fluid injection means, and by said downstream confining section of said first telescopic part provided with beverage collection means in fluid connection with a beverage discharge provided downstream thereof.

According to another preferred embodiment, the interior volume defined by said first and second telescopic parts, is approximately half the exterior volume defined by said first and second telescopic parts.

One other objective of the present invention is to provide a beverage preparation system including espresso type coffee, tea and similar, based upon the processing of respective individual portion packages, and including an extraction device of telescopic type.

This objective is solved according to the present invention by means of a beverage preparation system according to claim 13.

### Description of the Figures

The present invention shall now be described in greater detail based upon preferred embodiments and in the attached Figures.

The Figures show, in simplified schematic representations:
- Figures 1a - 1c:: side view and rear and front perspective views of an embodiment of an extraction device (1) according to the invention;
- Figures 2a - 2b:: perspective and side views expanded in their component parts, of the embodiment of extraction device (1) according to Figure 1;
- Figures 3a - 3c:: side views and side and top longitudinal cut views of the embodiment of extraction device (1) according to the invention, when in an open position (A);
- Figures 4a - 4c:: side views and longitudinal side and top cut views of the embodiment of extraction device (1) according to the invention, when in a closed position (B) ;
- Figures 5a - 5b:: schematic representation views of a beverage preparation system (20) including an extraction device (1) according to the invention.

### Detailed description of a preferred embodiment according to the invention

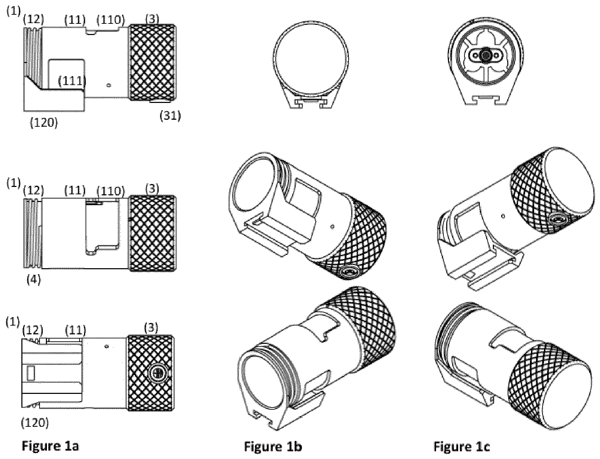

**Figures 1a** to **1c** represent exterior views of a first embodiment of an extraction device (1) according to the present invention.

Figures 1a represent side view (top), upside view (middle) and downside view (bottom). As one can observe, the extraction device (1) presents a telescopic-like arrangement including two telescopic parts (11, 12), provided in a substantially circular tubular form, whereby a first telescopic part (11) is provided so that it can be moved upstream and downstream relative to a second telescopic part (12) that is provided stationary, between an open position (A) and a closed position (B), and vice-versa.

Moreover, said first telescopic part (11) is configured so that it can be moved along a displacement extension outside of said second telescopic part (12), between said open position (A) and closed position (B) of the extraction device (1), and vice-versa, whereby said displacement extension corresponds at least approximately to a characteristic dimension of the portion package (2), such as for example its height. The extraction device (1) thus results in a particularly compact and simple constructive form.

According to a preferred embodiment, said second telescopic part (12) presents an engagement application (120) in its downward zone so that said extraction device (1) can be attached by means of pressured-fit union to a respective support provided in a structural part of the beverage preparation machine (not represented). This aspect is advantageous because it is thus avoided the use of attachment means of screw type or similar, and respective assembly effort. Figures 1b and 1c are respectively rear and front perspective views of said extraction device (1).

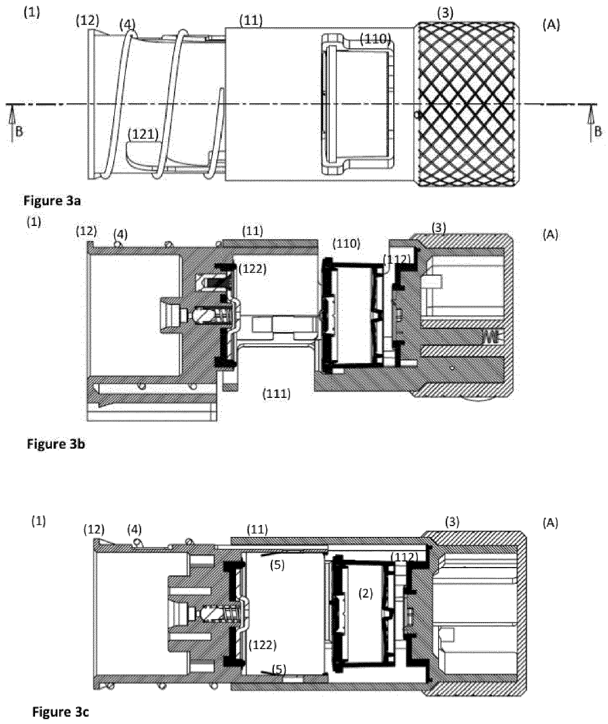

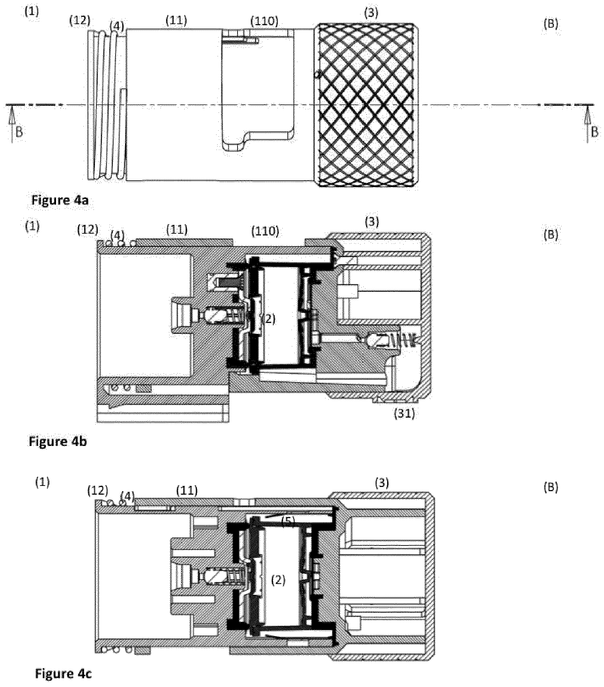

The operation of the extraction device (1) shall be explainer in greater detail further below, based upon Figures 3 and 4.

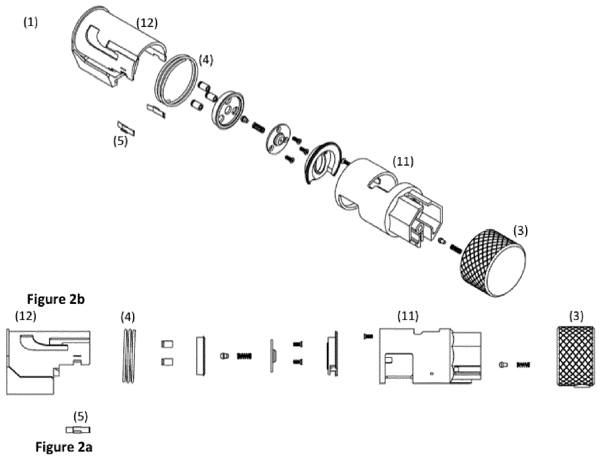

**Figures 2a** and **2b** are explored view representations of the preferred embodiment of the extraction device (1) according to Figure 1.

According to a first inventive aspect, said first telescopic part (11) is adapted so that it is the only part providing support to the downward oriented side of said portion package (2) inside of said extraction device (1). This configuration provides a simpler construction of the extraction device (1), eliminating the need for additional construction parts.

According to another preferred embodiment, said extraction device (1) is provided only with direct force transmission means, that is, with no force amplifying means such as for example of the lever or gear transmission type, or similar. The use of this type of amplifying means reduces the required driving force, but leads to a bigger volume and more complex construction.

Said first telescopic part (11) is thus provided so that, by means of applying a driving force in an upstream direction, it carries out a linear movement including at least a translation movement followed by a rotation movement between said open (A) and closed positions (B). Moreover, said driving force is applied manually and/or in motorized manner upon said first telescopic part, thereby generating a movement of said first telescopic part (11), between said open (A) and closed position (B), and vice-versa. Moreover, said first and second telescopic parts (11, 12) are adapted so as to provide a translation movement in a displacement extension of similar dimension as a characteristic dimension of said portion package (2), and to provide a rotation movement along at least a rotation angle adapted so as to provide to a user the perception of final position of movement, and preferentially to provide the blocking of said first telescopic part (11) in a closed position (B).

According to a preferred embodiment, said first telescopic part (11) is provided in connection with one actuation element (3) configured for application of a driving force, i.e., as an actuation handle of said first telescopic part (11). Moreover, said actuation element (3) is preferentially configured in form of handle for application of a manual force, and further presents a beverage discharge (31) in fluid connection with a beverage collection from the interior volume defined by said telescopic parts (11, 12).

According to another preferred embodiment, said discharge part (3) further includes an actuation device in functional connection with a control device of the machine (one abdicates in this case from describing or representing said elements because these are known in prior art), so that a given actuation movement and/or position of the actuation element (3) can start the cycle of beverage preparation.

As one can observe, the extraction device (1) further comprises auxiliary force means (4), including of spring or bumper type, so as to generate a force contrary to the movement between said open (A) and closed position (B), and a force favourable in the reverse movement. Said driving force of the extraction device (1) can be applied manually or in motorized manner.

Besides of the aforementioned component parts, it is possible to identify others relating to the tight sealing of the extraction chamber confined by said telescopic parts (11, 12), as well as upstream pressurized fluid injection means and beverage discharge means downstream thereof. Because they are components already known in prior art, one abdicates from their detail description.

**Figures 3a** to **3c** represent the preferred embodiment of the extraction device (1) according to the present invention, when in an open position (A).

As one can observe, said first telescopic part (11) presents an entry opening (110) adapted for introduction of a portion package (2) (not represented in this drawing), provided in its upward downstream zone, and an exit opening (111) for discharge of said individual portion package (2) after a respective extraction. It thus results that said first telescopic part (11) provides support to said portion package (2) while the latter is inside of the extraction device (1), without having to provide passage openings in more than one telescopic part.

As one can verify from Figure 3a, in this open position (A) it is possible to introduce a portion package (2) through the respective entry opening (110) provided in the upward downstream zone of said first telescopic part (11). As it can be observed in the drawing, the entry opening (110) is in this case disposed centred relative to its central longitudinal axis, oriented along a first direction.

In this position the auxiliary force means (4), in this case provided as helicoid spring, exert a respective minimum elastic force upon said first telescopic part (11) .

As one can observe, said first telescopic part (11) is thus adapted so as to collect and conduct the portion package (2) between said open (A) and closed positions (B), whereas said second telescopic part (12) is adapted so as to serve as stationary structure of support to the displacement of said first telescopic part (11) between said open (A) and closed positions (B), and vice-versa.

Moreover, in the case of this embodiment, said second telescopic part (12) is further provided with engagement guides (121), configured for example in manner of sliding grooves, on its exterior surface. These engagement grooves (121) engage with corresponding means provided on the interior surface of said first telescopic part (11), so as to guide the movement thereof between said open (A) and closed position (B), and vice-versa. As further to observe, said engagement guides (121) are provided developing along the longitudinal extension of said second telescopic part (12), and in its upstream edge are provided with a cross part relative to said longitudinal part, so that by means of a rotation of said first telescopic part (11) the latter can be retained in the corresponding in the closed position (B), and vice-versa. As it results evident, when said first telescopic part (11) is in the closed position (B), it is also submitted to a maximum actuation force by said auxiliary force means (4).

The process of operation of the represented extraction device (1) therefore includes, from the represented open position (A), the manual application of an actuation force upon the actuation element (3), so as to first convey a translation movement, in the upstream direction and against the elastic force exerted by said auxiliary force means (4), until that said portion package (2) is retained in the chamber confined by said telescopic parts (11, 12).

As it can be verified from Figure 3b (longitudinal side-cut view B-B), the portion package (2) gets retained in support upon an inferior zone of said first telescopic part (11).

As one can observe in Figure 3c (longitudinal top cut view), there are further provided ejection means (5) inside of the chamber confined by said telescopic parts (11, 12), adapted so that only enable the passage of the portion package (2) along the upstream direction. In the case of the represented embodiment, said ejection means (5) are provided as curved lamellas that enable the movement of an individual portion package (2) approaching the upstream confining section (122) of said second telescopic part (12), during the closing movement in the upstream direction, but then prevent it from jointly moving back with said first telescopic part (11) during the opening movement in the downstream direction, and thereby causing its exit through said exit opening (111). Moreover, the upstream confining section (122) of said second telescopic part (12) is provided with pressurized fluid injection means and the downstream confining section (112) of said second telescopic part (11) is provided with beverage collection means in fluid connection with the beverage discharge (31).

**Figures 4a** to **4c** correspond to the views of Figures 3a to 3c and represent the preferred embodiment of the extraction device (1) according to the present invention when in the closed position (B), that is, when in position of extraction of a beverage from an individual portion package (2).

As it can be verified from Figure 4a, in this closed position (B), the portion package (2) is retained in the chamber defined by said telescopic parts (11, 12). As one can further observe, the entry opening (110) is in this case laterally decentred relative to its central longitudinal axis, as a result from the rotation movement after the translation movement as aforementioned, for retention of said first telescopic part (11) in the closed position (B). Moreover, said auxiliary force means (4) is compressed, so that the latter exerts a respective maximum elastic force upon said first telescopic part (11) .

Figure 4b shows the portion package (2) retained in the chamber defined by the telescopic parts (11, 12), including the pressurized fluid injection means disposed upstream, provided in said second telescopic part (12), and the beverage discharge means disposed downstream, provided in fluid connection with the actuation element (3) and respective beverage discharge (31).

Figure 4c shows the extraction device (1) in the closed position (B) in a top view. As it can be observed, there are provided ejection means (5) that interact with a construction part of said portion package (2), for example the edges of a lid zone, so as to prevent the latter of jointly moving with said first telescopic part (11) on the occasion of the reverse movement, from the closed position (B) to the open position (A), and thus falls through the exit opening (121) that thereby results aligned underneath the portion package (2) during said reverse movement.

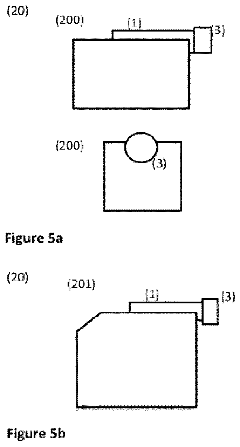

**Figures 5a** and **5b** are schematic representation views of a beverage preparation system (20) including an extraction device (1) according to the invention.

In the case of Figure 5a, it is represented an extraction device (1) according to the invention integrated in a beverage preparation system (20) embodied in the form of at least one autonomous beverage preparation machine (201) (in side view on the top drawing and in front view on the bottom), such as they are generally known in prior art.

Figure 5b illustrates the case of integration of said extraction device (1) into a beverage preparation system (20) that is different from an autonomous beverage preparation machine (201), that is a beverage preparation apparatus (202) adapted for integration into an autonomous structure, including a stationary or mobile structure, such as for example an automobile vehicle, or an automatic beverage vending system.

## Claims

1. Extraction device (1) adapted for preparation of beverages and providing a chamber-like space adapted for collecting a portion package (2) and presenting a telescopic-like arrangement including a first and second telescopic parts (11, 12) of substantially cylindrical tubular form along a common longitudinal axis, adapted so that said first telescopic part (11) can be moved in a displacement extension at least in part along at least part of the longitudinal extension of said second telescopic part (12) that is provided stationary, between an open position (A) where it is at least in part further downstream, and a closed position (B), and thereby defining a chamber-like space adapted for collecting said portion package (2), and vice-versa, whereby said first telescopic part (11) is configured so that it can receive a portion package (2) through a respective entry opening oriented upwards when in the open position (A), **characterized in that** said first telescopic part (11) is adapted so that it is the only part providing support to the downwards oriented side of said portion package (2) while the latter is inside of said extraction device (1) .

2. Extraction device (1) according to claim 1, **characterized**
**in that** said displacement extension in the longitudinal direction corresponds at least approximately to a characteristic dimension of said portion package (2), in particular the dimension thereof in said longitudinal direction, preferentially smaller than 1,4 times said longitudinal dimension of said portion (2) package.

3. Extraction device (1) according to claims 1 or 2, **characterized in that** said first telescopic part (11) presents a longitudinal extension similar to the longitudinal extension of said second telescopic part (12), whereby the longitudinal extension of said first and second telescopic parts (11, 12) is smaller than 3 times a characteristic dimension of said portion package (2), preferentially smaller than 2,8 times the longitudinal dimension thereof.

4. Extraction device (1) according to claims 1 to 3, **characterized in that** said first telescopic part (11) presents an entry passage (110) provided in a downstream zone, oriented in a first direction and providing the introduction of a portion package (2) when in said open position (A), and an exit passage (111) provided in an upstream zone, oriented in a second direction substantially opposite to said first direction and providing the exit of said portion package (2).

5. Extraction device (1) according to any one of claims 1 to 4, **characterized in that** said first telescopic part (11) is adapted so that it can collect said portion package (2) in an upstream region inside thereof and carry said portion package (2) between said open (A) and closed positions (B), and **in that** said second telescopic part (12) is provided stationary as structure of support to the displacement of said first telescopic part (11) between said open (A) and closed positions (B), and vice-versa.

6. Extraction device (1) according to any one of claims 1 to 5, **characterized in that** said telescopic parts (11, 12) are provided so that they configure an extraction chamber, whereby the interior downstream and base walls of said extraction chamber are provided by an upstream region of one of said telescopic parts (11, 12), preferentially said first telescopic part (11), and the interior upstream and top wall of said extraction chamber are provided by a downstream region of the other of said telescopic parts (11, 12), preferentially said second telescopic part (12).

7. Extraction device (1) according to any one of claims 1 to 6, **characterized in that** said first telescopic part (11, 12) presents a downstream confining section (112) developing along a cross-section and presenting beverage discharge means in fluid connection with a beverage discharge (31) provided downstream, and further presents a support part developing along said longitudinal direction and adapted so as to support the downwards oriented side of said portion package e (2).

8. Extraction device (1) according to any on of claims 1 to 7, **characterized in that** said second telescopic part (12) presents an upstream confining section (122) developing along a cross-section and presenting fluid injection means, whereby said upstream confining section (122) is provided in a central region along the longitudinal extension of said second telescopic part (12) .

9. Extraction device (1) according to claims 4 to 8, **characterized in that** said first telescopic part (11) is adapted so that it can receive a portion package (2) through a respective entry passage (110), oriented upwards along said first direction when in the open position (A), and can be moved along at least part of the exterior surface of said second telescopic part (12), to a closed position (B) where said portion package (2) is impinged in fixed manner by said upstream confining section (122) of said second telescopic part (12) provided with pressurized fluid injection means, and by said downstream confining section (112) of said first telescopic part (11) provided with beverage collection means in fluid connection with a beverage discharge (31) provided downstream.

10. Extraction device (1) according to claims 4 to 9, **characterized in that** said second telescopic part (12) presents retention means (5) adapted so as to enable the passage of said portion package (2) only in a movement in the upstream direction, to a position of proximity of said upstream confining section (122) of said second telescopic part (12), whereby said retention means (5) are provided in the interior side walls of said second telescopic part (12) in a region proximal of said upstream confining section (122).

11. Extraction device (1) according to any one of previous claims, **characterized in that** it presents at least one fitting application (120) configured so as to fit in fixed manner in a corresponding application provided for support of said extraction device (1).

12. Extraction device (1) according to any one of previous claims, **characterized in that** said first telescopic part (11) is adapted for engagement with an actuation element (3) provided in tubular form, whereby the latter is preferentially provided with a beverage discharge (31) and an actuation element provided in operational connection with a control device.

13. System (20) for preparation of beverages and including at least one extraction device (1) adapted so as to inject a pressurized fluid flow in a portion package (2) and collect the resulting beverage downstream thereof, said extraction device (1) being according to any of the previous claims 1 to 12, wherein said extraction device (1) is fixed to a respective support by means of pressure-fit engagement.

14. System (20) according to claim 13, **characterized in that** it includes at least one autonomous beverage preparation machine (201), or at least one beverage preparation apparatus (202) adapted for integration into an autonomous structures, including into a mobile or stationary construction.

## Patentansprüche

1. Absauggerät (1) angepasst zur Getränkezubereitung und versorgend einen kammerartigen Raum angepasst zur Sammlung einer Dosierungspackung (2) und darstellend eine teleskopähnliche Einrichtung einschließlich einen ersten und zweiten teleskopischen Teile (11, 12) von wesentlich zylindrisch-röhrenförmiger Form entlang einer gemeinsamen Längsachse so angepasst, dass genannter erste teleskopische Teil (11) in einer Verschiebungsverlängerung bewegt werden kann mindestens teils entlang mindestens teils von der Längsverlängerung von genanntem zweiten teleskopischen Teil (12), der stationär vorhanden ist zwischen einer offenen Position (A), wo er mindestens teils weiter stromabwärts ist, und einer geschlossenen Position (B), und dabei einen kammerartigen Raum definierend angepasst zur Sammlung von genannter Dosierungspackung (2), und umgekehrt, wobei genannter erster teleskopischer Teil (11) so konfiguriert ist, dass er eine Dosierungspackung (2) durch eine entsprechende Eingangsöffnung aufwärts gerichtet wenn in der offenen Position (A) empfangen kann, **dadurch gekennzeichnet, dass** genannter erster teleskopischer Teil (11) so angepasst ist, der einzige Teil zu sein, der eine Stütze zur abwärts gerichteten Seite von genannter Dosierungspackung (2) versorgt, während letztens innerhalb von genanntem Absauggerät (1) ist.

2. Absauggerät (1) gemäß Anspruch 1 **dadurch gekennzeichnet, dass** genannte Verschiebungsverlängerung in der Längsrichtung mindestens in etwa einer charakteristischen Dimension von genannter Dosierungspackung (2) entspricht, insbesondere einer Dimension davon in genannter Längsrichtung, vorzugsweise kleiner als 1,4-mal die genannte Längsdimension von genannter Dosierungspackung (2) .

3. Absauggerät (1) gemäß Ansprüche 1 oder 2 **dadurch gekennzeichnet, dass** genannter erster teleskopischer Teil (11) eine Längsverlängerung ähnlich der Längsverlängerung von genanntem zweiten teleskopischen Teil (12) aufweist, wobei die Längsverlängerung von genannten ersten und zweiten teleskopischen Teilen (11, 12) kleiner als 3-mal eine charakteristische Dimension von genannter Dosierungspackung (2) ist, vorzugsweise kleiner als 2,8-mal die Längsdimension davon.

4. Absauggerät (1) gemäß Ansprüche 1 bis 3 **dadurch gekennzeichnet, dass** genannter erster teleskopischer Teil (11) einen Eingangsdurchgang (110) aufweist versorgt in einer Zone stromabwärts, gerichtet nach einer ersten Richtung und versorgend die Einführung einer Dosierungspackung (2) wenn in genannter offenen Position (A), und einen Ausgangsdurchgang (111) versorgt in einer Zone stromaufwärts, gerichtet nach einer zweiten Richtung insbesondere gegenüber einer genannten ersten Richtung und versorgend den Ausgang von genannter Dosierungspackung (2).

5. Absauggerät (1) gemäß einer der Ansprüche 1 bis 4 **dadurch gekennzeichnet, dass** genannter erster teleskopischer Teil (11) so angepasst ist, um genannte Dosierungspackung (2) in einem Gebiet stromaufwärts innerhalb davon zu sammeln und genannte Dosierungspackung (2) zwischen genannten offenen (A) und geschlossenen Positionen (B) zu führen, und dass genannter zweiter teleskopischer Teil (12) als Stützenstruktur zur Verschiebung von genanntem ersten teleskopischen Teil (11) zwischen genannten offenen (A) und geschlossenen Positionen (B) stationär vorhanden ist, und umgekehrt.

6. Absauggerät (1) gemäß einer der Ansprüche 1 bis 5 **dadurch gekennzeichnet, dass** genannte teleskopischen Teilen (11, 12) so vorhanden sind, um eine Absaugkammer zu gestalten, wobei der Inhalt stromabwärts und die Grundwände von genannter Absaugkammer durch ein Gebiet stromaufwärts von einer der genannten teleskopischen Teilen (11, 12) vorhanden sind, vorzugsweise genanntem ersten teleskopischen Teil (11), und der Inhalt stromaufwärts und die Oberwand von genannter Absaugkammer durch ein Gebiet stromabwärts von genannten teleskopischen Teilen (11, 12) vorhanden sind, vorzugsweise genanntem zweiten teleskopischen Teil (12).

7. Absauggerät (1) gemäß einer der Ansprüche 1 bis 6 **dadurch gekennzeichnet, dass** genannter erster teleskopischer Teil (11, 12) einen stromabwärts eingeschränkten Abschnitt (112) aufweist, sich entwickelnd entlang einem Kreuzschnitt und darstellend Getränkeausflussmittel in flüssiger Verbindung mit einem Getränkeausfluss (31) stromaufwärts vorhanden, und weiter einen Stützteil aufweist, sich entwickelnd entlang genannter Längsrichtung und so angepasst, um die stromabwärts gerichtete Seite von genannter Dosierungspackung (2) zu stützen.

8. Absauggerät (1) gemäß einer der Ansprüche 1 bis 7 **dadurch gekennzeichnet, dass** genannter zweiter teleskopischer Teil (12) einen stromaufwärts eingeschränkten Abschnitt (122) aufweist, sich entwickelnd entlang einem Kreuzschnitt und darstellend Flüssigkeitseinspritzmittel, wobei genannter stromaufwärts eingeschränkter Abschnitt (122) in einer Zentralregion entlang der Längsverlängerung von genanntem zweiten teleskopischen Teil (12) vorhanden ist.

9. Absauggerät (1) gemäß Ansprüche 4 bis 8 **dadurch gekennzeichnet, dass** genannter erster teleskopischer Teil (11) so angepasst ist, um eine Dosierungspackung (2) durch einen entsprechenden Eingangsdurchgang (110) zu empfangen, stromaufwärts gerichtet entlang genannter ersten Richtung wenn in der offenen Position (A), und entlang mindestens teils der äußeren Oberfläche von genanntem zweiten teleskopischen Teil (12) bewegt werden kann, zu einer geschlossenen Position (B), wo genannte Dosierungspackung (2) durch genannten stromaufwärts eingeschränkten Abschnitt (122) von genanntem zweiten teleskopischen Teil (12) fest beaufschlagt ist, der mit einem unter Druck stehenden Flüssigkeitseinspritzmittel, und durch genannten stromabwärts eingeschränkten Abschnitt (112) von genanntem ersten teleskopischen Teil (11), der versorgt ist mit Getränkeausflussmitteln in flüssiger Verbindung mit einem Getränkeausfluss (31) vorhanden stromabwärts.

10. Absauggerät (1) gemäß Ansprüche 4 bis 9 **dadurch gekennzeichnet, dass** genannter zweiter teleskopischer Teil (12) Beibehaltungsmittel (5) so angepasst aufweist, um den Durchgang von genannter Dosierungspackung (2) nur in einer Bewegung in die Richtung stromaufwärts zu ermöglichen, zu einer Position in der Nähe von genanntem stromaufwärts eingeschränkten Abschnitt (122) von genanntem zweiten teleskopischen Teil (12), wobei genannte Beibehaltungsmittel (5) in den inneren Seitenwänden von genanntem zweiten teleskopischen Teil (12) in einem Gebiet nahe von genanntem stromaufwärts eingeschränkten Abschnitt (122) vorhanden sind.

11. Absauggerät (1) gemäß einer der vorigen Ansprüche **dadurch gekennzeichnet, dass** es mindestens eine passende Anwendung (120) so gestaltet aufweist, um in einer entsprechenden Anwendung fest anzupassen vorhanden zur Stütze von genanntem Absauggerät (1).

12. Absauggerät (1) gemäß einer der vorigen Ansprüche **dadurch gekennzeichnet, dass** genannter erster teleskopischer Teil (11) zum Eingriff mit einem Betätigungselement (3) angepasst ist, vorhanden in Röhrenform, wobei letztens vorzugsweise mit einem Getränkeausfluss (31) und einem Betätigungselement vorhanden in einer funktionsbereiten Verbindung mit einem Kontrollgerät vorhanden ist.

13. System (20) zur Getränkezubereitung und einschließlich mindestens ein Absauggerät (1) so angepasst, um ein unter Druck stehenden Flüssigkeitsdurchgang in einer Dosierungspackung (2) einzuspritzen und das ergebende Getränk stromabwärts davon zu sammeln, genanntes Absauggerät (1) gemäß einer der vorigen Ansprüche 1 bis 12, worin genanntes Absauggerät (1) an einer entsprechenden Stütze mittels einem druck-passenden Eingriff befestigt ist.

14. System (20) gemäß Anspruch 13 **dadurch gekennzeichnet, dass** es mindestens eine autonome Getränkezubereitungsmaschine (201) einschließt, oder mindestens ein Getränkezubereitungsgerät (202) angepasst zur Einpassung in autonome Strukturen einschließlich in einem beweglichen oder stationären Bau.

## Revendications

1. Dispositif d'extraction (1) adapté à la préparation de breuvages et fournissant un espace de type chambre adapté à la collecte d'un emballage portion (2) et présentant un arrangement de type télescopique incluant une première et une seconde parties télescopiques (11, 12) d'une forme substantiellement tubulaire cylindrique le long d'un axe longitudinal commun, adapté afin que ladite première partie télescopique (11) puisse être déplacée dans une extension de déplacement au moins en partie le long au moins d'une partie de l'extension longitudinale de ladite seconde partie télescopique (12) qui est fournie stationnaire, entre une position ouverte (A) où il est au moins en partie plus en aval et une position fermée (B) et donc définissant un espace de type chambre adapté à la collecte dudit emballage de portion (2) et vice-versa, où ladite première partie télescopique (11) est configurée afin qu'elle puisse recevoir un emballage portion (2) à travers la respective entrée ouvrant orientée vers le haut lorsqu'en position ouverte (A), **caractérisée par le fait que** ladite première partie télescopique (11) est adaptée afin que ce soit la seule partie fournissant le support au côté orienté vers le bas dudit emballage portion (2) alors que ce dernier est à l'intérieur dudit dispositif d'extraction(1).

2. Dispositif d'extraction (1) selon la revendication 1, **caractérisé par le fait que** l'extension de déplacement dans la direction longitudinale correspond au moins approximativement à une dimension caractéristique dudit emballage portion (2), en particulier la dimension de celui-ci dans la direction longitudinale, de préférence plus petit que 1,4 fois de ladite dimension longitudinale de l'emballage (2) portion.

3. Dispositif d'extraction(1) selon la revendication 1 ou 2, **caractérisé par le fait que** ladite première partie télescopique (11) présente une extension longitudinale similaire à l'extension longitudinale de ladite seconde partie télescopique (12), où l'extension longitudinale des dites première et seconde parties télescopiques (11, 12) est plus petite que 3 fois une dimension caractéristique dudit emballage portion (2), de préférence plus petite que 2,8 fois la dimension longitudinale de celle-ci.

4. Dispositif d'extraction(1) selon les revendications 1 à 3, **caractérisé par le fait que** ladite première partie télescopique (11) présente un passage d'entrée (110) fourni dans la zone en aval, orienté dans une première direction et fournissant l'introduction d'un emballage portion (2) lorsque dans ladite position ouverte (A) et un passage d'entrée (111) fourni dans une zone en amont, orienté dans une seconde direction substantiellement opposée à ladite première direction et fournissant la sortie dudit emballage portion (2).

5. Dispositif d'extraction (1) selon une quelconque revendication entre 1 et 4, **caractérisé par le fait que** ladite première partie télescopique (11) est adaptée afin qu'elle puisse collecter ledit emballage portion (2) dans une région en amont à l'intérieur de celui-ci et transporter ledit emballage portion (2) entre ladite ouverture (A) et les positions fermées (B) et dans ladite seconde partie télescopique (12), elle est fournie stationnaire comme structure de support au déplacement de ladite première partie télescopique (11) entre ladite ouverture (A) et les positions fermées (B) et vice-versa.

6. Dispositif d'extraction (1) selon une quelconque revendication entre 1 et 5, **caractérisé par le fait que** les dites parties télescopiques (11, 12) sont fournies afin qu'elles configurent une chambre d'extraction, où les murs intérieurs de base et en aval de ladite chambre d'extraction sont fournis par une région en amont de l'une des dites parties télescopiques (11, 12), de préférence dans la première partie télescopique (11) et à l'intérieur du mur du haut et en amont de ladite chambre d'extraction sont fournis par une région en aval de l'autre des dites parties télescopiques (11, 12), de préférence la seconde partie télescopique (12).

7. Dispositif d'extraction(1) selon une quelconque revendication entre 1 et 6, **caractérisé par le fait que** ladite première partie télescopique (11, 12) présente une section confinant en aval (112) se développant le long d'une section transversale et présentant des moyens de décharge de breuvage en connexion fluide avec une décharge de breuvage (31) fournie en aval, et présentant de plus une partie de support se développant le long de ladite direction longitudinale et adaptée afin qu'elle supporte le côté orienté vers le bas dudit emballage portion (2).

8. Dispositif d'extraction(1) selon une quelconque revendication entre 1 et 7, **caractérisé par le fait que** la seconde partie télescopique (12) présente une section confinant en amont (122) se développant le long d'une section transversale et présentant des moyens d'injection de fluide, où ladite section confinant en amont (122) est fournie dans la région centrale le long de l'extension longitudinale de ladite seconde partie télescopique (12).

9. Dispositif d'extraction (1) selon les revendication 4 à 8, **caractérisé par le fait que** ladite première partie télescopique (11) est adaptée afin qu'elle puisse recevoir un emballage portion (2) à travers un passage d'entrée respectif (110), orienté en amont le long de ladite première direction lorsqu'en position ouverte (A), et peut être déplacé le long d'au moins d'une partie de la surface extérieure de ladite seconde partie télescopique (12), vers une position fermée (B) où ledit emballage portion (2) est empiété d'une manière fixe par ladite section confinant en amont (122) de ladite seconde partie télescopique (12) fournie avec des moyens d'injection de fluide pressurisé et par la dite section confinant en aval (112) de ladite première partie télescopique (11) fournie de moyens de collecte de breuvage dans une connexion fluide avec la décharge de breuvage (31), fournie en aval

10. Dispositif d'extraction (1) selon les revendications 4 à 9, **caractérisé par le fait que** la seconde partie télescopique (12) présente des moyens de rétention (5) adaptés afin de permettre le passage dudit emballage portion (2) uniquement dans un mouvement dans a direction en amont vers une position de proximité de ladite section confinant en amont (122) de ladite seconde partie télescopique (12), où lesdits moyens de rétention (5) sont fournis à l'intérieur des murs latéraux internes de ladite seconde partie télescopique (12) dans une région proximale de ladite section confinant en amont (122).

11. Dispositif d'extraction (1) selon une quelconque revendication antérieure, **caractérisé par le fait qu'**il présente au moins une application appropriée (120) configurée afin de s'adapter d'une manière fixe dans une application correspondant, fournie pour le support dudit dispositif d'extraction (1).

12. Dispositif d'extraction (1) selon une quelconque revendication antérieure, **caractérisé par le fait que** ladite première partie télescopique (11) est adaptée à l'engagement avec l'élément d'actionnement (3) fourni sous forme tubulaire, où ce dernier est de préférence fourni avec une décharge de breuvage (31) et un élément d'actionnement fourni dans une connexion opérationnelle avec un dispositif de contrôle.

13. Système (20) pour la préparation de breuvages et incluant au moins un dispositif d'extraction (1) adapté afin d'éjecter un écoulement de fluide pressurisé dans un emballage portion (2) et de collecter le breuvage résultant en aval de celui-ci, le dispositif d'extraction (1) étant en conformité avec une quelconque revendication antérieure entre 1 et 12, où ledit dispositif d'extraction (1) est fixé à un support respectif par des moyens d'engagement à ajustement à pression.

14. Système (20) selon la revendication 13, **caractérisé par le fait qu'**il inclut au moins une machine de préparation de breuvage autonome (201) ou au moins un appareil de préparation de breuvage (202) adapté à l'intégration dans des structures autonomes, y compris dans une construction stationnaire ou mobile.
